# EUROPÄISCHE PATENTANMELDUNG

(11) **EP 4 752 106 A1**
(43) Veröffentlichungstag der Anmeldung: **03.06.2026**
(21) Anmeldenummer: 24216391.3
(22) Anmeldetag: 29.11.2024
(51) Int. Cl.: C01B 33/107, H10F 71/00

(54) **AGGLOMERIERTES SEKUNDÄRSILICIUM, DESSEN HERSTELLUNG UND VERWENDUNG**

(71) Anmelder: Evonik Operations GmbH, 45128 Essen (DE)
(72) Erfinder: SMANS, Gert, 2640 Mortsel (BE); FISCHER, Frank, 65719 Hofheim (DE); REICHERT, Inga, 65187 Wiesbaden (DE); MÜLLER, Hubert, 65929 Frankfurt am Main (DE); ADAM, Dieter, 59494 Soest (DE)
(74) Vertreter: Evonik Patent Association

(57) **Zusammenfassung**

Die Erfindung betrifft ein Verfahren zur Herstellung von Chlorsilanen durch Hydrochlorierung von Silicium im Festbett, bei welchem partikuläre Agglomerate von Sekundärsilicium dem Festbett zugegeben werden, ein Verfahren zur Herstellung der partikulären Agglomerate, die partikulären Agglomerate selbst, sowie deren Verwendung als Edukt in der Hydrochlorierung von Silicium. Ihr lag die Aufgabe zu Grunde, ein Festbett-Verfahren zur Herstellung von Chlorsilanen unter Einsatz von Sekundärsilicium anzugeben, bei dem das Sekundärsilicium mit weniger Aufwand gehandhabt werden kann. Eine Grundidee des erfindungsgemäßen Verfahrens besteht darin, ein partikuläres Sekundärsilicium zu nutzen, welches eine größere Partikelgröße aufweist. Genauer gesagt, sollte der Median der Partikelgrößenverteilung des Sekundärsiliciums D_{50S} zwischen 0.1 mm und 5 mm betragen. Innerhalb der Agglomerate wird Wasserglas als Binder verwendet.

## Beschreibung

Die Erfindung betrifft ein Verfahren zur Herstellung von Chlorsilanen durch Hydrochlorierung von Silicium im Festbett, bei welchem partikuläre Agglomerate von Sekundärsilicium dem Festbett zugegeben werden, ein Verfahren zur Herstellung der partikulären Agglomerate, die partikulären Agglomerate selbst, sowie deren Verwendung als Edukt in der Hydrochlorierung von Silicium.

Die Chlorsilane bilden eine Klasse von Verbindungen, die ausschließlich aus den Elementen Silicium (Si), Chlor (Cl) und ggf. Wasserstoff (H) bestehen. Die allgemeine Summenformel der Chlorsilane lautet

H₍₄₋ₙ₎SiClₙ

wobei n eine natürliche Zahl keiner 5 bezeichnet.

Die Substanzklasse der Chlorsilane umfasst daher vier Verbindungen, nämlich Monochlorsilan (HsSiCI), Dichlorsilan (H₂SiCl₂), Trichlorsilan (HSiCl₃) und Tetrachlorsilan (SiCl₄).

Die Chlorsilane werden großindustriell hergestellt und dienen unter anderem als Ausgangsstoff für die Herstellung von Silicium-basierten Halbleiterprodukten, wie beispielweise integrierte Schaltkreise oder Photovoltaikmodule.

Aus chemischer Sicht erfolgt die Synthese der Chlorsilane häufig durch die Hydrochlorierung von Silicium. Dabei wird Silicium mit Wasserstoff und Chlor umgesetzt, wobei Wasserstoff und Chlor meist in Form von Hydrogenchlorid (HCl) eingesetzt wird. Das Reaktionsschema lautet wie folgt:

2 Si + 7 HCl → HSiCl₃ + SiCl₄ + 3 H₂

Die vorstehende Reaktion bildet demnach Trichlorsilan und Tetrachlorsilan gleichzeitig; die genaue Zusammensetzung des Produktgemisches hängt von der Verfahrensführung ab. Es ist auch bekannt, die Bildungsrate der Haupt - und Nebenprodukte durch Zugabe von molekularem Wasserstoff (H₂), molekularem Chlor (Cl₂) oder sogar von weiteren Chlorsilanen (H₍₄₋ₙ₎SiClₙ) zu beeinflussen.

Aus verfahrenstechnischer Sicht wird die Hydrochlorierung von Silicium in der Regel in einem zweiphasigen System durchgeführt mit einer festen Phase enthaltend das Silicium und mit einer gasförmigen Phase enthaltend HCl und etwaige weitere Reaktanden. Die Reaktionsprodukte fallen ebenfalls in der Gasphase an und werden entsprechend zu den jeweiligen Zielprodukten aufgearbeitet.

Industriell betriebene Verfahren zur Hydrochlorierung unterscheiden sich wesentlich durch die Gestaltung des Kontaktes zwischen der festen Phase und der Gasphase: Einfachstenfalls wird das Silicium in grobstückiger Form auf den Rost eines Reaktors aufgeschichtet und von unten mit dem Edukt-Gas angeströmt. Das auf den Rost aufgegebene Silicium ist so bemessen, dass es nicht durch den Rost fällt.

So kann die Kantenlänge der auf den Rost aufgelegten Silicium-Brocken etwa 4 cm bis 15 cm betragen; vgl. DE102004059191B4. Das stückige Silicium wird bei dieser Verfahrensführung nicht nennenswert bewegt. Aus diesem Grunde wird die auf den Rost aufgebrachte Silicium-Schüttung als Festbett bezeichnet.

Es gibt ähnliche Verfahren, bei ebenfalls mit stückigem Silicium arbeiten, die auf einen Rost aufgebracht werden. Diese Betten werden allerdings geringfügig bewegt, etwa durch Bewegung des Rostes (Wanderbetten) oder durch Rühren des Bettes mit einem Rührorgan (Rührbett).

Von hoher industrieller Bedeutung sind auch so genannte Wirbelschicht-, Wirbelbett- bzw. Fluidbett-Verfahren. Hierbei werden die Silicium-Partikel mit hoher kinetischer Energie angeströmt, sodass die Partikel in dem Gasstrom fluidisiert werden. Die einzelnen Partikel bewegen sich dann recht schnell innerhalb der Wirbelschicht. Um ihre Fluidisierung zu ermöglichen, sind die Silicium-Partikel viel kleiner als die in einem Festbett-Verfahren: die Körnungen in Wirbelschicht-Verfahren liegen etwa im Bereich von 50 µm bis 700 µm; vgl. EP3781519B1.

Die vorliegende Erfindung liegt auf dem Gebiet der Festbettverfahren.

Das in industriell betriebenen Verfahren eingesetzte Silicium ist nicht chemisch rein. Es handelt sich vielmehr um ein metallisches Material, welches überwiegend Silicium und zudem auch andere Metalle, wie etwa Eisen (Fe) oder Aluminium (Al) oder andere Elemente wie Calcium (Ca) oder Bor (B) oder Kohlenstoff (C) enthalten kann. Häufig weist das Material auch ein Oxidschicht auf, die Sauerstoff (O) enthält. In der Regel besteht das eingesetzte Silicium-haltige Material zu mindestens 98 Gew.-% aus elementaren Silicium. Solches hochreines Silicium wird durch Reduktion von Sand (SiOz) mit Kohlenstoff im Lichtbogen hergestellt. Es gibt aber auch Betriebe, die als Siliciumquelle ein metallurgisch hergestelltes Material mit recht viel Eisen verwenden, ein so genanntes Ferrosilicium (FeSi).

Unabhängig davon, welche Korngröße das Silicium hat und wie es hergestellt wurde, handelt es sich bei dem in heutiger industrieller Hydrochlorierung eingesetztem, Silicium-haltigen Material um so genanntes Primärsilicium. Dies bedeutet, das das Silicium erstmalig in ein technisches Produkt überführt wird und zuvor sein Dasein in der Erdkruste gefristet hat. Da die Erdkruste große Mengen an Silicium in oxidischer Form enthält, gab es bislang kaum Anlass, von der Nutzung von Primärsilicium abzusehen.

Wie bereits geschildert, wird hochreines Silicium aus primärer Rohstoffquelle (Sand) per Lichtbogen erhitzt und mit Kohlenstoff reduziert. Dabei entsteht denknotwenig Kohlenstoffdioxid (CO₂):

SiO₂ + C → Si + CO₂

Um den CO₂-Fußabdruck der Chlorsilane zu reduzieren, sollten diese möglichst aus einem solchem Silicium hergestellt werden, welches bereits anderweitig technisch genutzt wurde, nämlich so genanntes Sekundärsilicium.

Sekundärsilicium beschreibt ein Silicium-haltiges Material, welches nicht aus einem natürlichen Rohstoff wie Sand gewonnen wird, sondern aus einem von Menschen gemachten Gegenstand. Produktionsabfälle, die bei der Herstellung von technischen Gegenständen aus Primärsilicium anfallen, werden ebenfalls als Sekundärsilicium angesehen, obgleich sie kein Bestandteil des hergestellten technischen Gegenstands geworden sind. Beispiele dafür sind Späne, Verschnittmaterial, Abrieb und Asche. Das Sekundärsilicum stellt somit stets ein Rezyklat dar. Der Vorteil der Verwendung von Sekundärsilicium ist, dass dieses die oben beschriebene Reduktion bereits einmal durchlaufen hat. Auf eine erneute Reduktion von SiOz kann daher im Vergleich zum Einsatz von Primärsilicium verzichtet werden. Die Verwendung von Sekundärsilicium vermeidet daher zusätzliche CO₂ Emission.

Hinzu kommt, dass auch der Lichtbogen selbst einen hohen Energiebedarf hat, der bei Verwendung von Sekundärsilicium eingespart werden kann. Auch dies trägt dazu, den CO₂-Rucksack der Chlorsilane zu reduzieren. Dies gilt im Übrigen auch im Vergleich zu metallurgischem Primärsilicium, welche ebenfalls energieintensiv hergestellt wird.

Es lässt sich somit festhalten, dass die Verwendung von Sekundärsilicium anstelle von Primärsilicium sich günstig auf die CO₂ Emission und den Energiebedarf der Chlorsilanherstellung auswirkt.

Selbstverständlich sind bereits Anstrengungen darauf verwendet worden, Sekundärsilicium in der Chlorsilanherstellung einzusetzen.

Dabei fokussierten sich bekannte Entwicklungen insbesondere auf die Nutzbarmachung von so genannten Kerf. Kerf ist ein sehr feinteiliges, hochreines, partikuläres Silicium, welches beim Schneiden von Wafern in der Halbleiterfertigung anfällt. Die Partikelgröße von Kerf liegt in der Regel unter 100 µm. Mit dieser Größe lässt sich Kerf zwar in einem Wirbelbett umsetzen, aber nicht ohne Weiteres in einem Festbett: Da die Roste in industriellen Festbettreaktoren typischerweise eine Maschenweite von einigen Zentimetern haben, fällt der Kerf dort direkt durch und bleibt nicht in der Reaktionszone. Auch das Aufgeben des Kerfs in ein bestehendes Festbett ist nicht einfach, weil bestehende Reaktoren dafür eingerichtet sind, mit grobstückigem Silicium beschickt zu werden. Der feine Kerf würde die Förderstrecke verstopfen.

Um dieses Problem zu lösen wurde bereits ein in der Chlorsilanherstellung genutzter Festbettreaktor so modifiziert, dass er neben dem grobstückigen Primärsilicium auch feinteiliger Siliciumstaub, nämlich Kerf verarbeiten kann; vgl. WO2012065892A1. Das feinteiliges Material wird *"as is"* in den Reaktor eingeblasen. Nachteil dieser Entwicklung ist, dass der Reaktor entsprechend mit Mitteln zum Einblasen des feinteiligen Siliciums ausgestattet werden muss, was Kosten generiert. Auch muss der Prozess gewisse Mindesttemperaturen einhalten.

Um feinteiliges Sekundärsilicium in einem herkömmlichen Festbettreaktor nutzbar zu machen, kam die Idee auf, das Feinmaterial zu granulieren (EP2438009B1) oder hydraulisch zu verpressen (WO2014/095220A1). Auf diese Weise werden partikuläre Agglomerate erhalten, deren Partikelgröße viel größer ist als die Partikelgröße des Feinmaterials. In der WO2014/095220A1 werden partikuläre Agglomerate mit einem Durchmesser von etwa 40 mm erzeugt, die sich für die Vorlage in einen unmodifizierten Festbettreaktor eignen.

Die CN111807369B offenbart ein Verfahren zur Agglomeration von Sekundärsilicium, welches ebenfalls aus Waferkerf gewonnen wird. Dem Material wird ein Binder zugesetzt, nämlich Polyacrylamid oder Natriumsilicat. Die Partikelgröße der Agglomerate liegt unter 3 mm. Die Porosität liegt unter 4%. Die Herstellung der Agglomerate umfasst einen Trocknungsschritt. Diese Agglomerate sind dafür bestimmt, in der Herstellung von Silicium wiedereingeschmolzen zu werden. Für die Herstellung von Chlorsilanen im Festbett eignen sie sich aufgrund ihrer geringen Größe nicht.

Die WO2014110337A1 beschreibt ebenfalls das Agglomerieren von Silicium-Feinmaterial für metallurgische Zwecke. Das Material stammt aus dem Sägen von Ingots und ist daher als Sekundärsilicium aufzufassen. Als Bindemittel wird Lingosulfonat und Natriumsilicat genutzt. Das Verfahren umfasst einen Trocknungsschritt. Die partikulären Agglomerate weisen eine Partikelgröße zwischen 1 mm und 5 mm auf und sind daher für die Chlorsilanherstellung im Festbett zu klein.

All diesen Verfahren ist gemein, dass sie mit einem vergleichsweise feinen Sekundärsilicium arbeiten, nämlich dem Kerf. Bei der Verarbeitung dieses Materials ist zu beachten, dass feinteiliges Silicium dazu neigt, mit dem in feuchter Umgebungsluft enthalten Wasserdampf zu reagieren: Das Silicium Si reduziert das Wasser H₂O unter Bildung von SiO₂. Der dabei entstehende molekulare Wasserstoff H₂ reagiert mit dem Luftsauerstoff O₂ zurück zu Wasser, wobei viel Energie in kurzer Zeit freigesetzt wird (Knallgasreaktion). Außerdem erhöht feinteiliges SiO₂ das Silikose-Risiko des Personals. Aus diesen Gründen muss Si-Kerf sehr aufwendig unter Schutzatmosphäre gehandhabt werden. Dadurch entstehen hohe Kosten.

In Hinblick auf diesen Stand der Technik lag der vorliegenden Erfindung die Aufgabe zu Grunde, ein Festbett-Verfahren zur Herstellung von Chlorsilanen unter Einsatz von Sekundärsilicium anzugeben, bei dem das Sekundärsilicium mit weniger Aufwand gehandhabt werden kann.

Gelöst wird die Erfindung durch ein Verfahren zur Herstellung von Chlorsilanen, bei welchem ein Festbett umfassend ein partikuläres Primärsilicium von einem Fluidstrom angeströmt wird, wobei der Fluidstrom zumindest Wasserstoff und Chlor in Form von Chlorwasserstoff und/oder molekularem Wasserstoff und/oder molekularem Chlor enthält, wobei das partikuläre Primärsilicium eine Partikelgrößenverteilung aufweist, deren Medianwert D_{50P} zwischen 30 mm und 100 mm beträgt, und bei welchem partikuläre Agglomerate dem Festbett zugegeben werden, wobei die partikulären Agglomerate partikuläres Sekundärsilicium und mindestens einen anorganischen Binder enthalten, und wobei die partikulären Agglomerate eine Partikelgrößenverteilung aufweisen, deren Medianwert D_{50A} zwischen 20 mm und 65 mm beträgt, bei welchem die Verbesserung darin besteht, dass das partikuläre Sekundärsilicium eine Partikelgrößenverteilung aufweist, deren Medianwert D_{50S} zwischen 0.1 mm und 5 mm beträgt,
und dass es sich bei dem anorganischen Binder um Wasserglas handelt, wobei das Wasserglas ausgewählt ist aus der Gruppe bestehend aus den folgenden Wassergläsern: Lithiumsilicate, Natriumsilicate, Kaliumsilicate.

Eine Grundidee des erfindungsgemäßen Verfahrens besteht darin, ein partikuläres Sekundärsilicium zu nutzen, welches - verglichen mit Kerf - eine deutlich größere Partikelgröße aufweist, also gröber ist. Genauer gesagt, sollte der D₅₀-Wert, also der Median der Partikelgrößenverteilung des Sekundärsiliciums, zwischen 0.1 mm und 5 mm betragen. In dieser Größenordnung ist die Gefahr einer Selbstentzündung und auch die Gesundheitsrisiken für die Mitarbeiter deutlich reduziert. Die zu treffenden Sicherheitsmaßnahmen bei der Handhabung dieses partikulären Sekundärsiliciums sind verglichen denen für Si-Staub deutlich geringer.

Um stabile Agglomerate in einer Größenordnung von einigen Zentimetern zu erhalten, die nicht durch den Rost eines Festbettreaktors fallen, ist bei der Verwendung der groben Sekundärpartikel der Einsatz eines Binders erforderlich. Bei dem Binder handelt es sich erfindungsgemäß um ein Wasserglas, genauer gesagt um ein Lithiumsilicat und/oder ein Natriumsilicat und/oder ein Kaliumsilicat. Es existieren jeweils mehrere Silicate des Lithiums, des Natriums und des Kaliums. Diese können allesamt verwendet werden, auch untereinander gemischt. Der Vorteil dieses anorganischen Binders ist, dass er sehr gut auf dem Silicium haftet und hochtemperaturbeständig ist. Deswegen bleiben die Agglomerate auch im Reaktor hinreichend lang stabil, sodass das Sekundärsilicium auch zu Chlorsilanen umgesetzt wird statt durch den Rost zu rieseln. Außerdem werden mit dem Wasserglas nur sehr wenige Fremdatome in den Prozess eingetragen, nämlich das jeweilige Alkalimetall (Lithium, Natrium, Kalium) sowie etwas Sauerstoff. Im Übrigen besteht Wasserglas nämlich aus Silicium, welches ohnehin im Festbett gebraucht wird. Auf diese Weise wird der Prozess durch den Binder kaum verunreinigt - dies ist eine wichtige Voraussetzung für die Herstellung hochreiner Chlorsilane.

Erfindungsgemäß wird das Sekundärsilicium mit Hilfe des Wasserglases zu Agglomeraten gefügt. Die Agglomerate sind deutlich gröber als das Sekundärsilicium. Der Medianwert D_{50A} der Partikelgrößenverteilung der Agglomerate liegt in einem Bereich von 20 mm bis 65 mm und daher etwa in der Größenordnung der Partikel des Primärsiliciums, der sich von 30 mm bis 100 mm erstreckt. Aus diesem Grunde fallen die Agglomerate nicht durch das Rost. Erfindungsgemäß werden also insgesamt drei Partikelgrößen aufeinander abgestimmt eingesetzt, nämlich die des Primärsiliciums, die des Sekundärsiliciums und das der Agglomerate. Eine Übersicht dazu bietet Tabelle 1.

**Tabelle 1: Übersicht der Partikelgrößenverteilungen**

| Partikel | Position | Fraktion | Index | D₅₀ min /mm | D₅₀ max / mm |
|---|---|---|---|---|---|
| Primärsilicium | 4 | eins | P | 30 | 100 |
| Agglomerate | 5 | zwei | A | 20 | 65 |
| Sekundärsilicium | 9 | [-] | S | 0.1 | 5 |
| Silicium | [-] | [-] | B | 3 | 100 |

Die in der letzten Spalte der Tabelle 1 genannte Partikelgrößenverteilung des Siliciums mit dem Index B bezieht sich auf die Quelle des Sekundärmaterials; dazu später mehr.

Alle hier genannten Partikelgrößenverteilungen werden in üblicher Weise per Siebanalyse oder per dynamischer Bildanalyse, Laserlichtstreuung oder dynamische Lichtstreuung bestimmt. Automatisierte Messgeräte dafür sind handelsüblich. Die klassische Siebanalyse gelingt auch manuell.

Vorzugsweise wird partikuläres Sekundärsilicium verwendet, welches eine Siliciumkonzentration aufweist, die über die Partikelgrößenverteilung des partikulären Sekundärsiliciums statistisch verteilt ist. Derartiges Sekundärsilicum ist nämlich preiswerter als solches, welches eine enge Spezifikation, also etwa einen konstanten Siliciumgehalt für alle Partikelgrößen aufweist. Versuche zeigen, dass sich Sekundärmaterial trotz des über die Partikelgröße schwankenden Siliciumgehalts problemlos einsetzen lässt. Es steht zur Vermutung, dass die Agglomeration den schwankenden Siliciumgehalt ausgleicht.

Um die herzustellenden Chlorsilane nicht zu verunreinigen, sollten das eingesetzte Sekundärmaterial möglichst wenig Fremdatome eintragen. Deswegen sollten die partikulären Agglomerate die folgenden Elemente in folgender Konzentration enthalten:
- 90 Gew.-% bis 99.9 Gew.-% Silicium;
- 0.1 Gew.-% bis 10 Gew.-% Summe aller Alkalimetalle, ausgewählt aus Lithium, Natrium, Kalium;
- 0 Gew.-% bis 8 Gew.-% andere Elemente als Si, Li, Na, K;
wobei die genannten Gewichtsanteile auf das Gesamtgewicht der Agglomerate bezogen sind und wobei die Gewichtsanteile der enthaltenen Elemente sich zu 100 Gew.-% ergänzen. Verglichen mit metallurgisch hergestelltem Primärsilicium sind die Agglomerate recht unrein.

Sofern der Verschmutzungsgrad der Agglomerate höher ist, sollte die Einsatzmenge des Sekundärsiliciums nicht zu groß werden. Vorzugsweise beträgt der Gewichtsanteil der partikulären Agglomerate im Festbett zwischen 5 Gew.-% und 25 Gew.-%, bezogen auf das Gesamtgewicht des Festbetts.

Die Agglomerate sollten porös sein, damit sie sich gut von dem Chlorwasserstoff durchströmen lassen. Die Porosität ergibt sich von selbst, wenn das Sekundärsilicium beim Formen der Agglomerate nicht zu stark verdichtet wird.

Die Formgebung der Agglomerate erfolgt vorzugsweise so, dass die partikulären Agglomerate jeweils eine rotationssymmetrische Gestalt aufweisen. Dadurch werden sie hinreichend im Festbett stabil und lassen sich gut entformen. Vorzugsweise ist die Form zylindrisch, kegelförmig, kugelig, Torus förmig oder ellipsoid.

Es kommen unterschiedliche Quellen für das Sekundärsilicium in Betracht. Vorzugsweise wird das partikuläre Sekundärsilicium aus einem Verfahren zur Herstellung von Chlorsilanen entnommen. Bei dem Verfahren handelt es sich entweder um das Verfahren zur Hydrochlorierung, in dem die Agglomerate eingesetzt werden, selbst (internes Rezyklat) oder um einen Abfallstoff aus einem anderen Verfahren zur Chlorsilanherstellung, was etwa ausschließlich mit Primärsilicium beschickt wird.

Konkret kann das Sekundärsilicium durch Klassieren aus dem Bett einer Hydrochlorierung abgezogen werden, in dessen Bett partikuläres Silicium mit einer Partikelgrößenverteilung vorliegt, deren Medianwert D_{50B} zwischen 3 mm und 100 mm beträgt. Bei dem Bett kann es sich um ein statisches Bett, ein wanderndes Bett oder ein gerührtes Bett handeln. Fluidbetten sind aufgrund der kleineren Partikelgröße ungeeignet. Das Klassieren kann einfachstenfalls durch Absieben aus dem Bett oder Windsichten erfolgen. Konkret kann es sich bei dem Sekundärsilicum um Rostasche handeln.

Alternativ lässt sich das partikuläre Sekundärsilicium durch Abtrennen aus einem Gasstrom der Hydrochlorierung erhalten. Bei dem Gasstrom handelt es sich um den Produktgasstrom oder um eine Fraktion des Produktgasstroms. So kann es sich bei dem Sekundärsilicum um Flugasche handeln.

Bei dem Gasstrom kann es sich auch um ein Abgas handeln, welches aus der Förderstrecke zum Reaktor abgezogen wird, entlang dessen der Reaktor mit Edukt beschickt wird. Derartiges Abgas enthält Abrieb des zugeführten Siliciums, das sich erfindungsgemäß Agglomerieren und rezyklieren lässt.

Alternativ zu Produktionsrezyklaten kann das partikuläre Sekundärsilicium aus einem Verfahren zur Dekonstruktion von Photovoltaikmodulen stammt. Photovoltaikmodule enthalten viel Silicium und haben eine begrenze Lebensdauer. Deren Ablauf werden Photovoltaikmodule dekonstruiert und stofflich verwertet. Das dabei anfallende Sekundärsilicium lässt sich im erfindungsgemäßen Verfahren einsetzen.

Derartiges Material liegt typischerweise in Gestalt von im wesentlichen ebener Partikeln vor, deren Stärke zwischen 0.1 mm und 0.5 mm beträgt. Es lässt sich hervorragend mit Wasserglas agglomerieren.

Ein weiterer Gegenstand der vorliegenden Erfindung ist die Agglomeration selbst. Erfindungsgemäß weist das entsprechende Verfahren zum Herstellen von partikulären Agglomeraten aus partikulärem Sekundärsilicium die folgende Schritte auf:
a) Bereitstellen von partikulärem Sekundärsilicium, welches eine Partikelgrößenverteilung aufweist, deren Medianwert D_{50S} zwischen 0.1 mm und 5 mm beträgt;
b) Bereitstellen einer wässrigen Lösung enthaltend Wasserglas, wobei das Wasserglas ausgewählt ist aus der Gruppe bestehend aus den folgenden Wassergläsern: Lithiumsilicate, Natriumsilicate, Kaliumsilicate;
c) Vermischen des partikulären Sekundärsiliciums mit der wässrigen Lösung unter Erhalt eines feuchten Gemisches;
b) Formgebung des feuchten Gemisches in Portionen, wobei jede Portion einen Äquivalentdurchmesser von 20 mm bis 65 mm aufweist;
c) Trocknen der feuchten Portionen unter Erhalt der Agglomerate.

Ein solches Verfahren lässt sich einfach unter Verwendung entsprechender Formen durchführen.

Vorzugsweise werden zur Formgebung Formen verwendet werden, welche eine perforierte Wandung aufweisen. Diese erlauben nämlich ein einfaches Antrocknen der Portionen in der Form und sodann ein leichtes entformen zum Fertigtrocknen. Das Trocknen der feuchten Portionen erfolgt somit zumindest teilweise innerhalb der Formen und zumindest teilweise außerhalb der Formen.

Ein weiterer Gegenstand der Erfindung sind die durch die Agglomeration erhaltenen Agglomerate. Die erfindungsgemäßen, partikulären Agglomerate enthalten das partikuläre Sekundärsilicium und den anorganischen Binder. Die erfindungsgemäßen partikulären Agglomerate weisen eine Partikelgrößenverteilung auf, deren Medianwert D_{50A} zwischen 20 mm und 65 mm beträgt. Bei dem anorganischen Binder handelt es sich um Wasserglas, welches ausgewählt ist aus der Gruppe bestehend aus den folgenden Wassergläsern: Lithiumsilicate, Natriumsilicate, Kaliumsilicate. Das partikuläre Sekundärsilicium weist eine Partikelgrößenverteilung aufweist, deren Medianwert D_{50S} zwischen 0.1 mm und 5 mm beträgt.

Die partikuläre Agglomerate weisen vorzugsweise weitere Merkmale auf, die im Rahmen des erfindungsgemäßen Hydrochlorierungsverfahrens bezüglich der Agglomerate oder des Sekundärsiliciums als bevorzugt beschrieben wurden.

Ein weiterer Gegenstand der Erfindung sind partikuläre Agglomerate, die durch die erfindungsgemäße Agglomeration erhältlich sind. Diese Agglomerate weisen die durch die Agglomeration bestimmte Zusammensetzung und Morphologie auf.

Die Agglomerate werden vorzugsweise als Edukt in einem Verfahren zur Herstellung von Chlorsilanen durch Umsetzen von Silicium mit Chlorwasserstoff und/oder molekularem Wasserstoff und molekularem Chlor eingesetzt. Diese Verwendung stellt einen weiteren Gegenstand der Erfindung.

### Figurenbeschreibung

Die Erfindung soll nun anhand von Figuren näher erläutert werden. Hierfür zeigen jeweils schematisch:
- **Fig. 1:**: Durchführung einer Hydrochlorierung von Silicium im Festbettreaktor
- **Fig. 2:**: Agglomerat;
- **Fig. 3:**: Detailansicht Agglomerat.

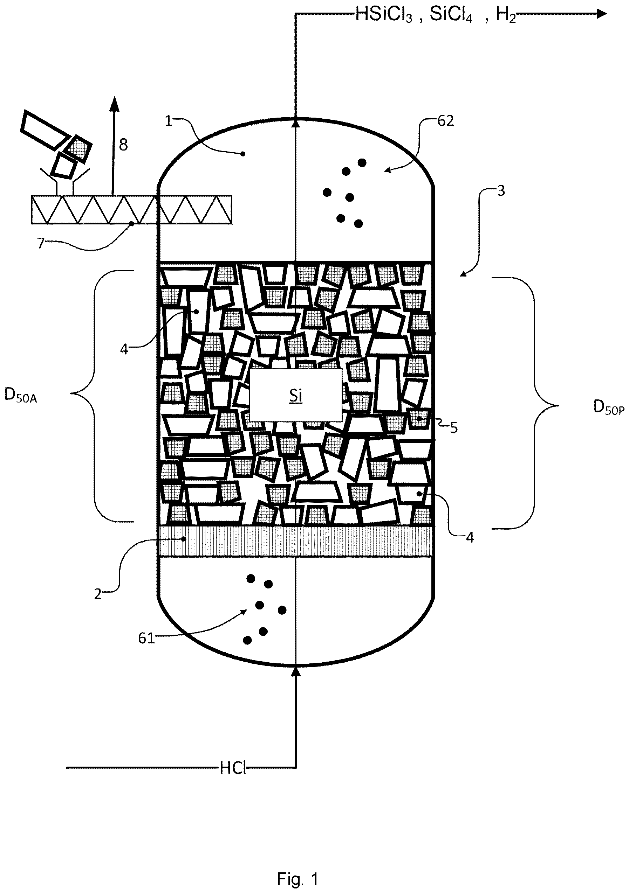

Figur 1 zeigt schematisch einen Festbettreaktor 1. Der Festbettreaktor 1 ist im Wesentlichen schachtförmig ausgeführt. An seinem Boden weist er einen Rost 2 auf. Auf den Rost 2 aufgelegt ist ein Festbett 3 umfassend partikuläres, festes Silicium Si. Das Festbett 3 setzt sich aus zwei Partikelfraktionen zusammen, nämlich eine erste Fraktion P gebildet von partikulärem Primärsilicium 4 und eine zweite Fraktion A gebildet von partikulären Agglomeraten 5.

Wenngleich beide Fraktionen P, A partikuläres Silicium enthalten, unterscheiden sie sich doch durch mindestens drei Aspekte, nämlich die Partikelgrößenverteilung innerhalb der Fraktion, der Aufbau eines einzelnen Partikels und die Provenienz des enthaltenen Siliciums:
Zunächst sind die Partikel des Primärsilicums 4 gröber als die Agglomerate 5: Die Fraktion P des Primärsiliciums 4 weist eine Partikelgrößenverteilung auf, deren Medianwert D_{50P} zwischen 30 mm und 100 mm beträgt, wie etwa 70 mm. Der Medianwert D_{50A} der zweiten Fraktion beträgt indes zwischen 20 mm und 65 mm, so zum Beispiel 40mm. Dies bedeutet, dass die partikulären Agglomerate 5 vornehmlich feiner sind als das partikuläre Primärsilicium. Da die Größe der einzelnen Partikeln innerhalb beider Fraktionen statistisch verteilt ist, sind einzelne Partikel des Primärsiliciums 4 auch kleiner als die einzelne Partikel der Agglomerate 5. Die Partikelgrößenverteilung des gesamten Festbetts 3 ergibt sich aus den beiden jeweiligen Partikelgrößenverteilungen der beiden einzelnen Fraktionen P und A und dem Massenanteil der jeweiligen Fraktionen P und A am gesamten Festbett 3. Die Partikelgrößenverteilung der beiden Fraktionen P und A ist so gewählt, dass das partikuläre Silicium 4, 5 auf den Rost 2 aufgelegt werden kann, ohne dass eine signifikante Menge hindurchfällt.

Ein weiterer Unterschied zwischen den beiden Fraktionen P, A von partikulärem Silicium ist, dass das in der ersten Fraktion P enthaltene Primärsilicium 4 erstmalig zu einem technischen Produkt verarbeitet wird, währenddessen die die zweite Fraktion A bildenden Agglomerate 5 ein Silicium enthalten, welches zuvor bereits zu einem menschengemachten Gegenstand verarbeitet wurde. Das Silicium in der zweiten Fraktion A wird somit zumindest zum zweiten Mal technisch genutzt und wird deswegen Sekundärsilicium genannt. Das Silicium in der ersten Fraktion P wird erstmalig genutzt und deswegen Primärsilicium genannt. Bei dem Primärsilicium handelt es sich um ein aus der Erdkruste gewonnenen Rohstoff, bei dem Sekundärsilicium um ein Rezyklat aus einem Artefakt oder aus dessen Produktion. Auf elementarer Ebene lässt sich das in den partikulären Agglomeraten 5 enthaltene Silicium freilich nicht von dem in dem partikulären Primärsilicium 4 enthaltenen Silicium unterscheiden. Allerdings enthalten die Partikel beider Fraktionen P, A neben dem Silicium auch andere Elemente als Verunreinigungen. Anhand der spezifischen Zusammensetzung der Verunreinigung lassen sich die Partikel durchaus ihrer jeweiligen Fraktion zuordnen.

Ein weiterer wichtiger Unterschied zwischen den beiden Fraktionen P, A besteht in der Morphologie der Partikel: Die Primärpartikel sind überwiegend monolithisch, weil sie im Wege ihrer metallurgischen Aufarbeitung aus einer Schmelze gewonnen werden. Die partikulären Agglomerate setzen sich hingegen zusammen aus einer Vielzahl kleinerer Partikel , dem eigentlichen Sekundärsilicium. Dieser Umstand wird noch später näher erläutert.

Abgesehen von der besonderen Zusammensetzung des Festbettes 3 unterscheidet sich das erfindungsgemäße Verfahren zur Herstellung von Chlorsilanen nicht von herkömmlichen Festbettverfahren:
Der Reaktor 1 wird von unten mit gasförmigen Chlorwasserstoff HCl beaufschlagt. Der Chlorwasserstoff HCl strömt durch den Rost 2 und anschließend durch das Festbett 3 hindurch. Im Festbett 3 gerät der Chlorwasserstoff HCl mit dem in den Partikeln 4, 5 enthaltenden Silicium Si in Kontakt und wird gemäß der eingangs genannten Formel zu Trichlorsilan HSiCl₃, Tetrachlorsilan SiCl₄ und molekularem Wasserstoff H₂ umgesetzt. Die Chlorsilane und der Wasserstoff werden als Produktgasstrom vom Kopf des Reaktors 1 abgezogen und weiter aufgearbeitet. Durch die Umsetzung des Siliciums in die Chlorsilane werden die Partikel 4, 5 in dem Festbett 3 mit der Zeit verzehrt und werden kleiner, bis sie als Rostasche 61 durch den Rost 2 fallen. Ein Teil der Asche wird auch mit dem Produktgasstrom mitgerissen und über Kopf aus dem Reaktor 1 als Flugasche 62 ausgetragen. Die Flugasche 62 wird mit einem Zyklon oder einem Wäscher aus dem Produktgasstrom abgeschieden. Um den Austrag an Silicium aus dem Festbett 3 auszugleichen, werden kontinuierlich oder chargenweise frische Partikel der ersten Fraktion P und der zweiten Fraktion A nachdosiert. Dafür ist eine Förderstrecke 7 vorgesehen. In der Förderstrecke 7 entsteht durch Abrieb siliciumhaltiger Feinstaub 8. Dieser wird aus der Förderstrecke 7 abgesaugt.

Die hier beschrieben Reaktion ist exotherm, der Reaktor 1 braucht daher nicht geheizt werden. Die Reaktion braucht nicht katalysiert werden, d.h. das Festbett 3 enthält keinen Katalysator. Die kinetische Energie des anströmenden HCl ist so bemessen, dass sie nicht ausreicht, die Partikel 4,5 im Festbett 3 signifikant zu bewegen. Das Festbett 3 ist locker gepackt, sodass die gasförmige Phase hindurch strömen kann.

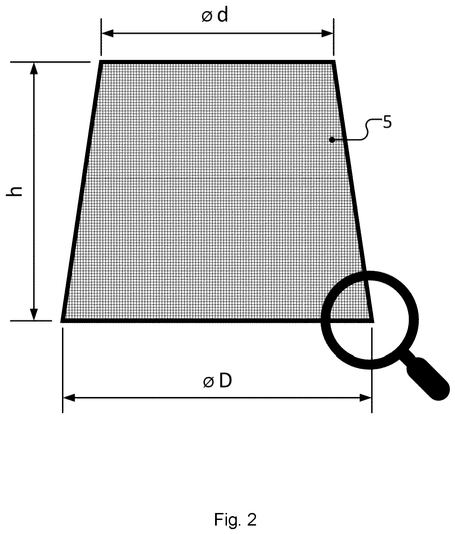

Figur 2 zeigt ein einzelnes Agglomerat 5, also ein einzelnes Partikel aus der zweiten Fraktion A. Makroskopisch betrachtet, hat das Agglomerat 5 im Wesentlichen die rotationssymmetrische Gestalt eines Kegelstumpfes. Der Durchmesser am Fuß Ø*D* beträgt etwa 42 mm, der Durchmesser am Kegelschnitt Ø*d* beträgt etwa 38 mm. Die Höhe *h* beträgt etwa 40 mm. Die Streuung dieser Maße ist über die gesamte zweite Partikelfraktion A vergleichsweise eng. Dies liegt daran, dass die Agglomerate 5 urgeformt sind; dazu später mehr. Aus den genannten Dimensionen der Makrogestalt eines einzelnen Agglomerats 5 und der hohen Maßhaltigkeit aller Partikel der zweiten Partikelfraktion A folgt, dass der Medianwert D_{50A} der Partikelgrößenverteilung der zweiten Fraktion A bei etwa bei 40 mm liegt und die Standardabweichung vergleichsweise klein ist.

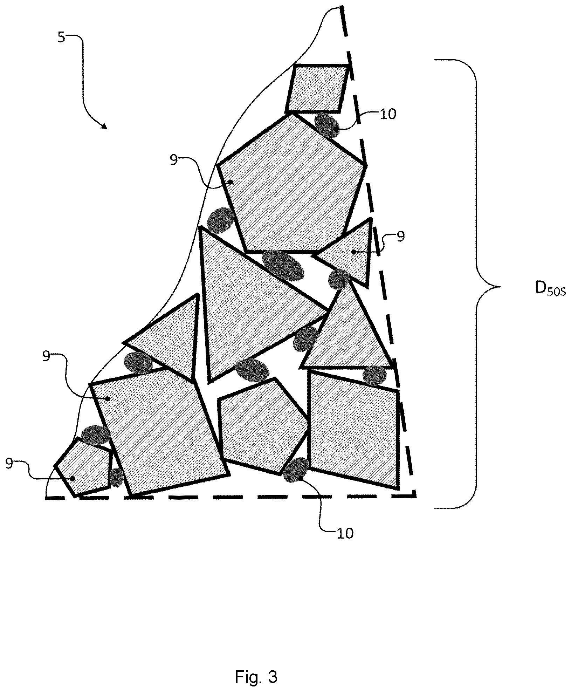

Die rechte Seite des Fußes des in Figur 2 dargestellten Agglomerats 5 (unter der Lupe) ist in Figur 3 vergrößert dargestellt. In dieser Darstellung lässt sich die Mikrostruktur des Agglomerats 5 erkennen.

Das Agglomerat 5 setzt sich aus einer Vielzahl kleinerer Partikel aus Sekundärsilicium 9 zusammen. Die Partikeln des Sekundärsiliciums 9 sind sehr unregelmäßig geformt. Es handelt sich beispielsweise um gemahlene Photovoltaikmodule. Die Partikeln des Sekundärsiliciums 9 sind daher flach und weisen eine Stärke von etwa 0.2 mm auf. Dies entspricht der Stärke der Siliciumschicht innerhalb des vermahlenen Photovoltaikmoduls, die trotz Mahlung erhalten bleibt. Die ebene Gestalt der Partikeln des Sekundärsiliciums 9 ist aber durch Mahlung sehr unregelmäßig, ihr Flächenmaß vergleichsweise weit gestreut. Beides führt dazu, dass die Standardabweichung der Partikelgröße des Sekundärsiliciums 9 vergleichsweise groß ist. Der Medianwert D_{50S} der Partikelgrößenverteilung des Sekundärsiliciums 9 liegt zwischen 0.1 und 5 mm, zum Beispiel bei 2mm. In ähnlicher Größenordnung liegt auch die Rostasche 61, die Flugasche 62 oder der Feinstaub 8 aus der Förderstrecke 7. Die Morphologie dieser Partikel 61, 62, 8 ist aber eine andere als bei dem vermahlenen Photovoltaikmodulen, denn sie sind nicht so flach. Im Übrigen unterscheiden sich die alle hier genannten Arten von Sekundärsiliciums 9 auch durch ihre stoffliche Zusammensetzung.

Damit das Sekundärsilicium 9 gut aneinander haftet und ein stabiles Agglomerat 5 bildet, ist dem Agglomerat 5 zusätzlich ein Binder 10 zugemischt, welcher die einzelnen Partikeln von Sekundärsilicium 9 untereinander verbindet. Bei dem Binder 9 handelt es sich um ein Wasserglas wie beispielsweise Natriumsilicat.

Die Bindermenge wird möglichst gering gehalten, damit das Festbett 3 nicht mit unnötig vielen Fremdatomen verunreinigt wird. Dies und die unregelmäßige Form des partikulären Sekundärsiliciums 9 führt dazu, dass das Agglomerat 5 porös ist. Dies begünstigt den Gasfluss durch das Festbett und die Zugänglichkeit des Siliciums für den Chlorwasserstoff.

### Beispiele

Die Herstellung der Agglomerate aus Sekundärsilicium wird nun anhand von Beispielen näher erläutert.

### 1. Auswahl von geeignetem Sekundärsilicium

### 1a) EoL-PV Module (gemäß der Erfindung)

Photovoltaikmodule unbekannter Herkunft wurden nach dem Ende ihrer Nutzungsdauer durch Demontage, Zerkleinerung und Sortierung in unterschiedliche Materialfraktionen wie Aluminium, Glas, Kupfer und Silicium zerlegt. Das so zurückgewonnene Silicium wurde hinsichtlich seiner Partikelgrößenverteilung untersucht. Der D₅₀-Wert lag bei etwa 250 µm.

Aufgrund der kristallinen Struktur der Solarzelle wird vermutet, dass der Silicium-Anteil über alle Siebfraktionen homogen verteilt ist und annährend 100 Gew. % beträgt.

Das zurückgewonnene Silicium wurde mit einer Wasserstoffsonde beprobt. Testergebnis negativ.

Die aus den Solarzellen zurückgewonnene Silicium wurden als geeignet qualifiziert.

### 1b) Siliciumabfall einer Chlorsilananlage (gemäß der Erfindung).

Die Anmelderin betreibt eine Hydrochlorierung von Silicium nach dem Festbett-Prinzip. Dieser Prozess hat drei Auslässe für Siliciumabfall: (i) Flugasche, (ii) Rostasche und (iii) Staub aus der Förderstrecke der Chlorsilananlage. Der Siliciumabfall aus allen drei Auslässen wird in der Tasse eines Wäschers gesammelt. Das gesammelte Material ist durch den Kontakt mit HCl-Gas sauer und wird deshalb neutralisiert. Von dem neutralisierten Material wird Wasser abgepresst. Der noch leicht restfeuchte Filterkuchen wird einer Siebanalyse unterzogen. Das Ergebnis ist in Tabelle 2 dargestellt.

**Tabelle 2: Siebanalyse des Siliciumabfalls aus der Tasse der Chlorsilananlage**

| | | | | | |
|---|---|---|---|---|---|
| Siebfraktion | x < 0.5 mm | 0.5 mm < x < 1.8 mm | 1.8 mm < x < 3.15 mm | 3.15 mm < x < 5 mm | 5 mm < x |
| Gew.-% | 5.6* | 33.4* | 30.2 | 13.6 | 17.2 |

| | | | | | |
|---|---|---|---|---|---|
| * Aufgrund der Feuchtigkeit konnten die Fraktionen < 0.5 mm und < 1.8 mm nicht exakt abgesiebt werden. | | | | | |

Der aus der Tasse gewonne Siliciumabfall wies einen D₅₀ Wert von etwa 3 mm auf.

Um die Verteilung des Siliciumanteils über die Partikelgröße zu untersuchen, wurde jede Siebfraktion einer XRD Analyse unterzogen. Zur Überprüfung wurden zwei Fraktionen zusätzlich einer XRF Analyse unterzogen. Die Ergebnisse sind in Tabelle 3 aufgetragen:

**Tabelle 3: XRD und XRF Analyse des Siliciumabfalls aus der Tasse der Chlorsilananlage**

| | | | | | |
|---|---|---|---|---|---|
| Siebfraktion | x < 0.5 mm | 0.5 mm < x < 1.8 mm | 1.8 mm < x < 3.15 mm | 3.15 mm < x < 5 mm | 5 mm < x |
| Si Anteil (Gew.-%) XRD | 81.1 | 90.3 | 94.4 | 96.5 | 98.0 |
| Si Anteil (Gew.-%) XRF | 72 | | 97 | | |

Der Siliciumanteil nimmt folglich mit der Partikelgröße zu. Im Bereich des Medians der Partikelgrößenverteilung ist von einem Si-Gehalt über 92 Gew.% auszugehen.

Der Siliciumabfalll wurde mit einer Wasserstoffsonde beprobt. Es wurde kein Wasserstoff detektiert.

Im Ergebnis wurde der Siliciumabfall der Chlorsilananlage als geeignet qualifiziert.

### 1c) Kerf (nicht gemäß der Erfindung)

Ein rotbraunes, feuchtes Pulver wurde als Schneidabfall aus einer Halbleiterfertigung bezogen. Die Partikelgröße lag unter 0.1mm. Der Kerf wurde mit einer Wasserstoffsonde beprobt. Es wurde ein starker Ausschlag des Messgeräts festgestellt. Das Material wurde nicht weiter untersucht und als ungeeignet qualifiziert.

### 2. Herstellung von Agglomeraten (gemäß der Erfindung)

Das in den Beispielen 1 a) und 1 b) qualifizierte Sekundärsilicium wurde jeweils wie folgt in Agglomerate verarbeitet:
Es wurden 95 g des jeweiligen Sekundärsiliciums wurde mit 5 g Natriumsilikat-Lösung (VTIROLIQ S-150 von Qemetica S.A.Warschau, PL, vormals Ciech Vitrosilicon) von Hand vermischt, sodass eine pastöse Masse erhalten wurde.

Die pastöse Masse wurde in neun Silikon-Formen (zylindrisch bis kegelstumpfförmig, 20mm hoch, 10mm Durchmesser, teilweise perforierte Wandung) eingefüllt.

Die Masse wurde bei Raumtemperatur angetrocknet. Sodann wurde die angetrocknete Masse aus den Formen gelöst. Dabei bliebt die Portionen der Masse, die in den perforierten Formen angetrocknet wurde, intakt. Die Portionen der Masse, die in unperforierten Formen angetrocknet wurde, zerbröselten.

Die intakten Portionen wurden in einen Trockenschrank bei 60°C bis 120°C getrocknet.

Dadurch wurden feste Agglomerate in Gestalt von zylindrischen Pellets, Größe etwa 20 mm x 10mm erhalten. Die Pellets wurde wogen im Schnitt 3.87 g.

### 3. Verwendung der Agglomerate als Edukt in der Herstellung von Chlorsilanen

Die in Beispiel 2 erhaltenen Agglomerate wurden nun hinsichtlich ihrer Eignung zur Herstellung von Chlorsilanen getestet.

Für die Versuche 3a, 3b und 3c wurde der Reaktor jeweils für sechs Stunden mit Chlorwasserstoff angeströmt. Das Produktgas wurde vom Reaktorkopf abgezogen und hinsichtlich seiner Zusammensetzung analysiert.

### 3a) Festbett 100% Primärsilicium (Vergleichsversuch)

Metallurgisch hergestelltes Ferrosilicium, (FeSi -, Partikelgröße zwischen 30 mm und 100 mm, Silicium-Anteil über 98 Gew.-%) wurde in den Reaktor eingefüllt. Die Analyseergebnisse sind in Tabelle 4 aufgetragen.

### 3b) Festbett 100% Agglomerate (erfindungsgemäß)

Die in Beispiel 2 erhaltenen Agglomerate wurden in den Reaktor eingefüllt. Die Analyseergebnisse sind in Tabelle 4 aufgetragen.

### 3c) Festbett 20% Agglomerate, 80% Primärsilicium (erfindungsgemäß)

20 Gew.-% der in Beispiel 2 erhaltenen Agglomerate und 80 Gew.-% des in Versuch 3a) beschriebenen Ferrosiliciums wurden in den Reaktor eingefüllt. Die Analyseergebnisse sind in Tabelle 4 aufgetragen.

**Tabelle 4: Analyse des Produktstroms**

| **Versuch** | **FeSi** | **Pellets** | **Si Verbrauch** | **Chlorsilane mix** | **Verhältnis Tetrachlorsilan: Trichlorsilan** | **Silan Verunreiniqunqen** | **Feste Verunreiniqunqen** |
|---|---|---|---|---|---|---|---|
| [-] | [Gew.-%] | [Gew.-%] | [g/h] | [g/h] | [-] | [%] | [g/g] |
| 3a | 100 | 0 | 8.4 | 46.4 | 88:12 | 0.53 | 0.009 |
| 3b | 0 | 100 | 8.5 | 46.7 | 91:09 | 0.9 | 0.015 |
| 3c | 80 | 20 | 8.6 | 45.2 | 88:12 | 0.6 | 0.007 |

### 4. Fazit / Diskussion

Das Sekundärsilicium, welches aus dekonstruierten PV-Modulen bzw. aus dem Produktionsabfall der Chlorsilananlage gewonnen wurde, konnte in stabile Agglomerate überführt werden. Die Agglomerate ließen sich im Festbett mit Chlorwasserstoff zu Tetrachlorsilan und Trichlorsilan umsetzen.

Verglichen mit einem allein mit Primärsilicium betriebenen Prozess nehmen die Verunreinigungen des Produktes stark zu, wenn ausschließlich Sekundärsilicium genutzt wird. Die Herstellung von hochreinen Chlorsilanen ausschließlich mit Sekundärmaterial erfordert daher eine zusätzliche Produktreinigung, was den Prozess unwirtschaftlich erscheinen lässt.

Wird das agglomerierte Sekundärsilicium allerdings zu einem geringen Anteil von lediglich 20 % beigemischt, steigen die Verunreinigungen nicht nennenswert an.

Es empfiehlt sich daher, die Einsatzmenge des eingesetzten Sekundärsiliciums auf etwa 20 % zu begrenzen.

### Bezugszeichenliste

- 1: Festbettreaktor
- 2: Rost
- 3: Festbett
- 4: Primärsilicium
- 5: Agglomerate
- 61: Rostasche
- 62: Flugasche
- 7: Förderstrecke
- 8: Feinstaub
- 9: Sekundärsilicium
- 10: Binder
- P: erste Fraktion: partikuläres Primärsilicium
- A: zweite Fraktion: partikuläre Agglomerate

- D_{50P}: Medianwert der Partikelgrößenverteilung der ersten Fraktion
- D_{50A}: Medianwert der Partikelgrößenverteilung der zweiten Fraktion
- D_{50S}: Medianwert der Partikelgrößenverteilung des Sekundärsiliciums

- Si: Silicium
- HCl: Chlorwasserstoff
- HSiCl₃: Trichlorsilan
- SiCl₄: Tetrachlorsilan
- H₂: Wasserstoff (molekular)

## Patentansprüche

1. Verfahren zur Herstellung von Chlorsilanen, bei welchem ein Festbett umfassend ein partikuläres Primärsilicium von einem Fluidstrom angeströmt wird, wobei der Fluidstrom zumindest Wasserstoff und Chlor in Form von Chlorwasserstoff und/oder molekularem Wasserstoff und/oder molekularem Chlor enthält,
wobei das partikuläre Primärsilicium eine Partikelgrößenverteilung aufweist, deren Medianwert D_{50P} zwischen 30 mm und 100 mm beträgt,
und bei welchem partikuläre Agglomerate dem Festbett zugegeben werden, wobei die partikulären Agglomerate partikuläres Sekundärsilicium und mindestens einen anorganischen Binder enthalten, und wobei die partikulären Agglomerate eine Partikelgrößenverteilung aufweisen, deren Medianwert D_{50A} zwischen 20 mm und 65 mm beträgt,
**dadurch gekennzeichnet,**
**dass** das partikuläre Sekundärsilicium eine Partikelgrößenverteilung aufweist, deren Medianwert D_{50S} zwischen 0.1 mm und 5 mm beträgt,
und **dass** es sich bei dem anorganischen Binder um Wasserglas handelt, wobei das Wasserglas ausgewählt ist aus der Gruppe bestehend aus den folgenden Wassergläsern: Lithiumsilicate, Natriumsilicate, Kaliumsilicate.

2. Verfahren nach Anspruch 1, **dadurch gekennzeichnet, dass** das partikuläre Sekundärsilicium eine Siliciumkonzentration aufweist, die über die Partikelgrößenverteilung des partikulären Sekundärsiliciums statistisch verteilt ist.

3. Verfahren nach Anspruch 1 oder 2, **dadurch gekennzeichnet, dass** der Gewichtsanteil der partikulären Agglomerate im Festbett zwischen 5 Gew.-% und 25 Gew.-% beträgt, bezogen auf das Gesamtgewicht des Festbetts.

4. Verfahren nach einem der Ansprüche 1 bis 3, **dadurch gekennzeichnet, dass** die partikulären Agglomerate porös sind.

5. Verfahren nach einem der Ansprüche 1 bis 4, **dadurch gekennzeichnet, dass** die partikulären Agglomerate jeweils eine rotationssymmetrische Gestalt aufweisen.

6. Verfahren nach einem der Ansprüche 1 bis 5, **dadurch gekennzeichnet, dass** das partikuläre Sekundärsilicium aus diesem Verfahren oder aus einem anderen Verfahren zur Herstellung von Chlorsilanen stammt.

7. Verfahren nach Anspruch 6, wobei das partikuläre Sekundärsilicium aus einem Verfahren zur Herstellung von Chlorsilanen stammt, bei welchem ein statisches Bett, ein wanderndes Bett oder ein gerührtes Bett umfassend ein partikuläres Silicium von einem Fluidstrom angeströmt wird, wobei der Fluidstrom zumindest Wasserstoff und Chlor in Form von Chlorwasserstoff und/oder molekularem Wasserstoff und/oder molekularem Chlor enthält und wobei das partikuläre Silicium eine Partikelgrößenverteilung aufweist, deren Medianwert D_{50B} zwischen 3 mm und 100 mm beträgt, **dadurch gekennzeichnet, dass** das partikuläre Sekundärsilicium durch Klassieren des Betts erhalten wird.

8. Verfahren nach Anspruch 6, wobei das partikuläre Sekundärsilicium durch Abtrennen aus einem Gasstrom erhalten wird.

9. Verfahren nach Anspruch 8, wobei das partikuläre Sekundärsilicium aus einem Verfahren zur Herstellung von Chlorsilanen stammt, bei welchem ein Produktgasstrom enthaltend Chlorsilane erzeugt wird, **dadurch gekennzeichnet, dass** es sich bei dem Gasstrom um den Produktgasstrom oder um eine Fraktion des Produktgasstroms handelt.

10. Verfahren nach Anspruch 8, wobei das partikuläre Sekundärsilicium aus einem Verfahren zur Herstellung von Chlorsilanen stammt, bei welchem ein Eduktstrom enthaltend partikuläres Silicium entlang einer Förderstrecke dem Bett zugeführt wird, **dadurch gekennzeichnet, dass** der Gasstrom aus der Förderstrecke abgezogen wird.

11. Verfahren nach einem der Ansprüche 1 bis 5, **dadurch gekennzeichnet, dass** das partikuläre Sekundärsilicium aus einem Verfahren zur Dekonstruktion von Photovoltaikmodulen stammt.

12. Verfahren nach Anspruch 11, **dadurch gekennzeichnet, dass** partikuläre Sekundärsilicium in Gestalt von im Wesentlichen ebener Partikeln vorliegt, deren Stärke zwischen 0.1 mm und 0.5 mm beträgt.

13. Verfahren zum Herstellen von partikulären Agglomeraten aus partikulärem Sekundärsilicium mit den folgenden Schritten:
d) Bereitstellen von partikulärem Sekundärsilicium, welches eine Partikelgrößenverteilung aufweist, deren Medianwert D_{50S} zwischen 0.1 mm und 5 mm beträgt;
b) Bereitstellen einer wässrigen Lösung enthaltend Wasserglas, wobei das Wasserglas ausgewählt ist aus der Gruppe bestehend aus den folgenden Wassergläsern: Lithiumsilicate, Natriumsilicate, Kaliumsilicate;
c) Vermischen des partikulären Sekundärsiliciums mit der wässrigen Lösung unter Erhalt eines feuchten Gemisches;
e) Formgebung des feuchten Gemisches in Portionen, wobei jede Portion einen Äquivalentdurchmesser von 20 mm bis 65 mm aufweist;
f) Trocknen der feuchten Portionen unter Erhalt der Agglomerate.

14. Verfahren nach Anspruch 13, **dadurch gekennzeichnet, dass** zur Formgebung Formen verwendet werden, welche eine perforierte Wandung aufweisen.

15. Verfahren nach Anspruch 14, **dadurch gekennzeichnet, dass** das Trocknen der feuchten Portionen zumindest teilweise innerhalb der Formen erfolgt.

16. Verfahren nach Anspruch 15, **dadurch gekennzeichnet, dass** das Trocknen der feuchten Portionen teilweise außerhalb der Formen erfolgt.

17. Partikuläre Agglomerate enthaltend partikuläres Sekundärsilicium und einen anorganischen Binder, wobei die partikulären Agglomerate eine Partikelgrößenverteilung aufweisen, deren Medianwert D_{50A} zwischen 20 mm und 65 mm beträgt, **dadurch gekennzeichnet,**
**dass** es sich bei dem anorganischen Binder um Wasserglas handelt, welches ausgewählt ist aus der Gruppe bestehend aus den folgenden Wassergläsern: Lithiumsilicate, Natriumsilicate, Kaliumsilicate,
und **dass** das partikuläre Sekundärsilicium eine Partikelgrößenverteilung aufweist, deren Medianwert D_{50S} zwischen 0.1 mm und 5 mm beträgt.

18. Partikuläre Agglomerate nach Anspruch 17, ferner ausweisend mindestens ein in den Ansprüchen 1 bis 12 genanntes, die partikulären Agglomerate und/oder das partikuläre Sekundärsilicium betreffende Merkmal.

19. Partikuläre Agglomerate nach Anspruch 17 oder 18, erhalten durch ein Verfahren nach einem der Ansprüche 13 bis 16.

20. Verwendung von partikulären Agglomeraten nach Anspruch 17 oder Anspruch 18 oder Anspruch 19 als Edukt in einem Verfahren zur Herstellung von Chlorsilanen durch Umsetzen von Silicium mit Chlorwasserstoff und/oder molekularem Wasserstoff und molekularem Chlor.
